# EUROPÄISCHE PATENTSCHRIFT

(11) **EP 2 697 521 B1**
(45) Veröffentlichungstag und Bekanntmachung des Hinweises auf die Patenterteilung: **22.03.2017**
(21) Anmeldenummer: 12715872.3
(22) Anmeldetag: 28.03.2012
(51) Int. Cl.: F16B 31/02

(54) **VORRICHTUNG ZUM ERKENNEN VON RELATIVBEWEGUNGEN IN EINEM FAHRZEUG**
DEVICE FOR DETECTING RELATIVE MOVEMENTS IN A VEHICLE
DISPOSITIF PERMETTANT L'IDENTIFICATION DE MOUVEMENTS RELATIFS DANS UN VÉHICULE

(30) Priorität: 12.04.2011 AT 5172011
(43) Veröffentlichungstag der Anmeldung: 19.02.2014
(73) Patentinhaber: Siemens AG Österreich, 1210 Wien (AT)
(72) Erfinder: WÖLS, Kurt, A-8010 Graz (AT)
(74) Vertreter: Maier, Daniel Oliver
(86) Internationale Anmeldenummer: PCT/EP2012/055503
(87) Internationale Veröffentlichungsnummer: WO 2012/139893

(56) Entgegenhaltungen:
- DE-A1-102005 007 194
- DE-A1-102006 009 898
- DE-A1-102007 030 195
- US-A1- 2009 207 008
- US-B1- 7 412 898

## Beschreibung

### Technisches Gebiet

Die Erfindung betrifft ein Verfahren zum Erkennen von Relativbewegungen zwischen bzw. von Bauteilen eines Fahrzeugs, insbesondere bei Schienenfahrzeugen, Eisenbahnen, und/oder Fahrwerken von Schienenfahrzeugen, etc.

Das Verfahren nach Anspruch 1 basiert auf dem Dokument DE 10 2006 009 898 A1, welches als nächst kommender Stand der Technik ein verfahren zum Erkennen von Relativbewegungen zeigt.

### Stand der Technik

Bei der Bewertung von Fahrzeugen, insbesondere Schienenfahrzeugen, werden Sicherheit, Verfügbarkeit und Wartungsfreundlichkeit üblicherweise als wesentliche Kriterien betrachtet. Besonders in Hinblick auf den Ausbau von Hochleistungs- bzw. Hochgeschwindigkeitsstrecken im Bereich der Eisenbahn gewinnen diese Eigenschaften für ein Fahrzeug immer mehr an Bedeutung. Da auf solchen Hochleistungsstrecken von einem Fahrzeug beispielsweise Geschwindigkeiten im Bereich von 200 bis 400 Kilometer pro Stunde erreicht werden können, ist dort eine sichere und ordnungsgemäße Funktion des Fahrzeugs, insbesondere des Fahrwerks besonders wichtig.

Als Fahrwerk wird dabei eine Gesamtheit aller beweglichen Teile eines Fahrzeugs bezeichnet, durch welches eine Verbindung zur Fahrbahn bzw. zum Gleis gewährleistet wird.

Bei einem Schienenfahrzeug werden durch das Fahrwerk, welches auch als Laufwerk bezeichnet wird, zwischen Gleis und Fahrzeug auftretende Kräfte übertragen und das Fahrzeug im Gleis abgestützt. Auch werden kleinere Unebenheiten im Gleis durch das Fahrwerk aufgenommen und nur vermindert an das Fahrzeug weitergegeben, wodurch die Laufruhe verbessert wird. Ein Fahrwerk eines Schienenfahrzeugs, insbesondere ein Eisenbahnfahrwerk, umfasst dabei üblicherweise die so genannten Radsätze, die Radsatzlager und eine Federung und besteht damit auch mehreren verschiedenen Bauteilen, welche miteinander über Verbindungsmittel (z.B. Schrauben, etc.) verbunden sein können.

Sind beispielsweise aufgrund von z.B. einer Belastung während des Betriebs Verbindungen zwischen Fahrzeugbauteilen, insbesondere im Bereich des Fahrwerks, gelockert worden, so können Lageänderungen dieser Bauteile und/oder Relativbewegungen zwischen diesen einzelnen Bauteilen auftreten. Relativbewegung bedeutet dabei, dass von einem ersten Bauteil in Relation zu einem zweiten Bauteil, mit dem dieses z.B. verbunden ist, eine meist nicht gewünschte Bewegung ausgeführt wird. Derartige Relativbewegungen sowie Lageänderungen können somit zu unkontrollierten Ausfällen, reduzierter Verfügbarkeit des Fahrzeugs, etc. führen und vor allem ein Sicherheitsrisiko darstellen.

Um die erforderliche Sicherheit von Fahrzeugen (z.B. Schienenfahrzeugen, Eisenbahn, etc.) zu gewährleisten bzw. um Ausfälle zu verhindern, sind regelmäßige Kontrollen der Fahrzeuge, insbesondere der Verbindungen von Fahrzeugbauteilen bzw. vor allem im Bereich des Fahrwerks, sowie eine Verrichtung von vorbeugenden Instandhaltungsarbeiten notwendig. Insbesondere dem Fahrwerk kommt bei diesen Kontrollen und Arbeiten aufgrund der hohen Sicherheitsanforderungen einerseits und dem im Vergleich zu einem Gesamtzug hohen Instandhaltungskosten andererseits eine besondere Bedeutung zu. Maßnahme für Kontrollen bzw. Instandhaltung des Fahrzeugs und vor allem des Fahrwerks sind beispielsweise Sichtkontrollen, Laufwerkskontrollen und/oder so genannte Revisionen, welche im Rahmen von Instandhaltungsplänen in festgelegten Abständen vorgeschrieben sind und vorgenommen werden.

Bei einer Sichtkontrolle kann z.B. eine optische und/oder visuelle Kontrolle des Fahrzeugs bzw. Schienefahrzeugs, insbesondere des Fahrwerks, durchgeführt werden. Dabei können beispielsweise mechanische Beschädigungen, offensichtliche Abnutzungen, offensichtliche Lageänderungen von Bauteilen, etc. festgestellt werden. Sichtkontrollen werden meist von geschultem Wartungspersonal als Tätigkeit durch Menschen ausgeführt und unterliegen gerade deshalb gegenüber automatisierten Prüfungen einem schlechten Wirkungsgrad. Es besteht somit die Gefahr, dass Fehler und/oder Mängel übersehen werden. Bei Laufwerkskontrollen können beispielsweise zusätzlich zur optisch-visuellen Prüfung auch geeignete Prüfmethoden/-systeme eingesetzt werden, um Mängel zu erkennen und/oder Störungen am Fahrwerk zu beheben. Eine Revision ist eine technische Überprüfung, welche vorgeschrieben ist und bei welcher sicherheitsrelevante Daten des Schienenfahrzeugs bzw. des Fahrwerks überprüft werden.

Allerdings ist oft beim Fahrwerk - dem eine besondere sicherheitsrelevante Bedeutung zukommt - der Zugang zu sicherheitsrelevanten Stellen erschwert und dadurch die Analyse- und Überprüfungsmöglichkeit eingeschränkt bzw. mit großem Aufwand verbunden. Das bedeutet, Prüfung und/oder Kontrolle eines Fahrzeugs, insbesondere der sicherheitsrelevanten Stellen, wie z.B. Verbindungen von Bauteilen, insbesondere im Bereich des Fahrwerks, sind zeitintensiv und mit großem Aufwand verbunden. Aufgrund der eingeschränkten Analysemöglichkeit beispielsweise bei Sicht- und/oder Laufwerkskontrollen sind sicherheitsrelevante Mängel wie z.B. gelöste Schrauben oder Muttern, lockere Verbindungen zwischen Bauteilen, welche zu ungewünschten Relativbewegungen und/oder Lageänderungen führen können, sowie z.B. so genannte Notfangeingriffe, etc. nur schwer und oft auch nicht rechtzeitig erkennbar.

### Darstellung der Erfindung

Der Erfindung liegt daher die Aufgabe zugrunde, eine Vorrichtung anzugeben, durch welche ohne großen Aufwand und auf kostengünstige Weise steigende Sicherheitsanforderungen für ein Fahrzeug erfüllt sowie Mängel und Fehler rasch und rechtzeitig detektiert werden und damit die Verfügbarkeit eines Fahrzeugs erhöht wird.

Erfindungsgemäß erfolgt die Lösung der Aufgabe durch Verfahren mit den Merkmalen nach Anspruch 1.

Der Hauptaspekt der erfindungsgemäß vorgeschlagenen Lösung besteht darin, dass der RFID-Transponder mit der Sollbruchstelle an relevanten zu überprüfenden Bauteilen, insbesondere bei Verbindungen von zwei oder mehreren Bauteilen angebracht wird. Bei Eintritt einer z.B. unerwünschten Relativbewegung und/oder Lageänderung eines Bauteils durch beispielsweise eine lockere Verbindung, etc. oder bei Verlust eines Bauteils (z.B. einer Mutter bei einer Schraubverbindung, etc.) verliert der RFID-Transponder seine Funktion. D.h. der RFID-Transponder an dieser Stelle des Fahrzeugs bzw. bei diesem Bauteil kann nicht mehr detektiert werden und ein Fehler/ Mängel am Fahrzeug kann damit rasch und mit relativ geringen Kosten - auch an schwer zugänglichen Stellen wie z.B. im Bereich des Fahrwerks - entdeckt und behoben werden, wodurch der Aufwand für die Instandhaltung des Fahrzeugs verringert wird. Durch den Einsatz von RFID-Transpondern können außerdem bereits sehr kleine Relativbewegungen zwischen Bauteilen erkannt werden und es ist auch möglich, menschliche Einflüsse wie z.B. eine menschliche Fehlerrate beispielsweise durch emotional-kognitive Disposition zu reduzieren.

Bei der "radio frequency identification" (RFID) geht es üblicherweise darum, mit Hilfe von elektromagnetischen Wellen eine Identifizierung durchzuführen. RFID ermöglicht damit eine automatische Erkennung und/oder Lokalisierung von Gegenständen, etc. und erleichtert so eine Erfassung von Daten erheblich. Ein RFID-System besteht daher üblicherweise aus einem RFID-Transponder, welcher sich am oder im jeweiligen Gegenstand, etc. befindet und einer RFID-Ausleseeinheit zum Auslesen des RFID-Transponders, in welchem unter anderem Daten zur Identifizierung gespeichert sind.

Daher ist es vorteilhaft, wenn für eine Funktionskontrolle der jeweiligen z.B. am Fahrzeug bzw. am Fahrwerk eines Fahrzeugs angebrachten RFID-Transponder zumindest eine RFID-Ausleseeinheit vorgesehen ist. Diese zumindest eine Ausleseeinheit kann entweder für eine laufende Funktionskontrolle schienenseitig oder am Fahrzeug angebracht sein. Damit kann auf einfache und kostengünstige Weise laufend das Fahrzeug wie z.B. das Fahrwerk eines Schienenfahrzeugs auf Fehler und Mängel untersucht werden. Treten unerwünschte Relativbewegungen und/oder Lageänderungen bei überwachten Bauteilen auf oder geht ein überwachter Bauteil verloren, bricht der RFID-Transponder an der Sollbruchstelle und kann damit von der RFID-Ausleseeinheit nicht mehr detektiert und ausgelesen werden.

Ein Aufbau eines RFID-Transponders sieht im Prinzip eine Antenne, einen permanenten Speicher bzw. Mikrochip, einen Träger sowie bei so genannten aktiven Transpondern eine Energieversorgung vor. Im Speicher sind dabei Daten hinterlegt, welche an die RFID-Ausleseeinheit übertragen werden und zur Identifikation dienen. Ist der RFID-Transponder an der Sollbruchstelle gebrochen, können diese Daten nicht mehr gesendet werden und der Mangel/Fehler am Fahrzeug kann auf diese Weise erkannt werden. Die Energie für eine Kommunikation mit der RFID-Ausleseeinheit kann der RFID-Transponder vom Feld der RFID-Ausleseeinheit beziehen, dann wird dieser Transponder auch als passiver Transponder bezeichnet.

Der RFID-Transponder kann allerdings auch über eine eigene Energieversorgung verfügen wie z.B. eine eingebaute Batterie oder einen Anschluss an ein externes Stromnetz, um die Kommunikationsreichweite des RFID-Transponders zu erhöhen. RFID-Transponder mit eigener Stromversorgung werden dann als aktive Transponder bezeichnet. Für die erfindungsgemäße Vorrichtung ist ein Einsatz von beiden Transponder-Typen (aktiv und passiv) denkbar.

Eine bevorzugte Weiterbildung der Erfindung sieht vor, dass jeder z.B. am Fahrzeug angebrachte RFID-Transponder eine eindeutige Kennung, z.B. eine Nummer, etc. aufweist, aus welcher eine Position (z.B. am Fahrzeug, am Fahrwerk eines Fahrzeugs, etc.) des jeweiligen RFID-Transponders ableitbar ist. Diese Kennung ist beispielsweise im Speicher des RFID-Transponders hinterlegt. Auf diese einfache Weise kann sehr leicht festgestellt werden, an welcher Position ein Fehler/ Mangel wie z.B. eine unerwünschte Relativbewegung eines Bauteils, eine Lageänderung, eine Lockerung einer Verbindung, ein Verlust eines Bauteils, etc. aufgetreten ist. Wird z.B. ein RFID-Transponder mit einer bestimmten Kennung bei einer Überprüfung nicht detektiert, dann kann daraus geschlossen werden, dass an seiner Position ein Fehler vorliegt. D.h. nur bei nicht detektierbaren RFID-Transpondern müssen - teilweise schwer zugängliche - Stellen am Fahrzeug wie z.B. im Bereich des Fahrwerks genauer inspiziert werden. Damit werden Kosten und Zeit eingespart.

Vorteilhafter Weise ist der RFID-Transponder zumindest am zu überwachenden Bauteil des Fahrzeugs fest angebracht. Damit wird ein Brechen an der Sollbruchstelle bei einer unerwünschten Relativbewegung und/oder einer Lageänderung des Bauteils erleichtert und ein Mangel am Fahrzeug ist damit einfacher feststellbar. Eine feste Anbringung des RFID-Transponders kann dabei durch Befestigungsmittel, insbesondere durch Kleben, Schweißen und/oder Schrauben, erfolgen, da derartige Verbindungen einfach anzubringen bzw. auszuführen sind.

Insbesondere empfiehlt sich, dass Fahrwerksbauteile überwacht werden, welche Verbindungen mittels Verbindungselementen aufweisen. Auf diese Weise können ohne großen Aufwand und rasch Mängel wie z.B. Lockerungen der Verbindungen und damit sicherheitsrelevante Bewegungen und/oder Lageänderung von Bauteilen festgestellt werden. Der RFID-Transponder kann dabei an einem ersten Bauteil z.B. fest angebracht werden und ist dann entweder mit einem zweiten Bauteil, welches eine Vebindung mit dem ersten Bauteil aufweist, oder mit einem gegebenenfalls verwendeten Verbindungsmittel verbunden. So ist es auch möglich, frühzeitig relativ kleine Relativbewegungen zwischen den Bauteilen zu erkennen.

Vorzugsweise werden Bauteile überwacht, bei welchen die Verbindung von einem oder mehreren Bauteilen mittels einer Schraubverbindung erfolgt. Auf diese Weise können ohne großen Zeitaufwand bereits relativ kleine Lockerungen bei Schraubverbindungen, welche beispielsweise durch Erschütterungen beim Einsatz des Fahrzeugs (z.B. Schienenfahrzeugs) bzw. des Fahrwerks auftreten, festgestellt werden. Es können mit der erfindungsgemäßen Vorrichtung z.B. gelockerte sowie fehlende Schrauben und/oder Schraubenmuttern erkannt werden, welche bei einer Sichtkontrolle z.B. aufgrund ihrer Position (z.B. schwer zugänglich) oder wegen der geringfügigen Lockerung kaum erkennbar sind.

### Kurzbeschreibung der Zeichnung

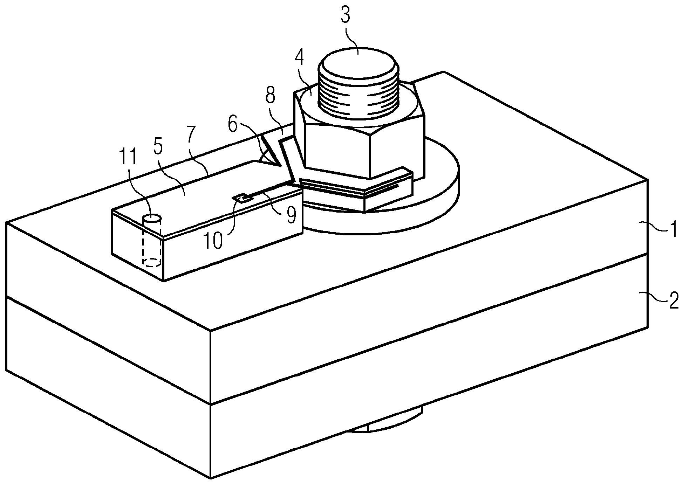

Die Erfindung wird nachfolgend in beispielhafter Weise anhand der beigefügten Figur erläutert. Es zeigt Figur 1 beispielhaft und schematisch die erfindungsgemäße Vorrichtung zum automatischen Erkennen von Relativbewegungen und Lageänderungen in einem Fahrzeug anhand einer beispielhaften Bauteileverbindung im Bereich eines Fahrwerks des Fahrzeugs.

### Ausführung der Erfindung

Figur 1 zeigt beispielhaft und in schematischer Weise ein erstes Bauteil 1 und ein zweites Bauteil 2 eines Fahrzeugs, insbesondere eines Eisenbahnfahrwerks bzw. eines Fahrwerks eines Schienenfahrzeugs. Das erste Bauteil 1 ist dabei mittels eines dritten Bauteils 3 (z.B. einer Schraube 3) mit dem zweiten Bauteil 2 verbunden. Diese beispielhafte Schraubverbindung umfasst dabei neben einem Verbindungsmittel bzw. einer Schraube 3 und einer Beilagenscheibe auch eine Schraubenmutter 4 zum besseren Fixieren dieser Verbindung.

Zum Erkennen von unerwünschten Relativbewegungen zwischen dem ersten Bauteil 1 und dem zweiten Bauteil 2 bzw. um Lageänderungen des ersten Bauteils 1 und/oder eine Lockerung der Schraubverbindung bzw. der Schraube 3 feststellen zu können, ist auf dem ersten Bauteil 1 ein RFID-Transponder 5 angebracht. Der RFID-Transponder 5 weist eine Sollbruchstelle 6 auf, durch welche der RFID-Transponder 5 in einen ersten Teil 7 und in einen zweiten Teil 8 geteilt wird. Der erste Teil 7 des RFID-Transponders 5 ist dabei auf dem ersten Bauteil mit Hilfe von Befestigungsmitteln 11 befestigt. Als Befestigungsmittel 11 können beispielsweise Schrauben, Klebstoff, eine Schweißverbindung, etc. eingesetzt werden. Der zweite Teil des RFID-Transponders 5 steht mit der Schraubverbindung bzw. mit der Schraubenmutter 4 in Verbindung. Es ist bei anderen Bauteilverbindungen in Fahrzeugen auch denkbar, dass der zweite Teil des RFID-Transponders 5 beispielsweise auf dem zweiten Bauteil 2, auf der Schraube 3, etc. angebracht ist, um eventuell auftretende Relativbewegungen und/oder Lageänderungen, Lockerungen der Schraube 3, etc. zu erkennen.

Weiters umfasst der RFID-Transponder zumindest einen Stoßschutz/Träger, eine Antenne 9 für eine Datenübertragung zu einer RFID-Ausleseeinheit, welche, um die Figur 1 einfacher zu gestalten, nicht dargestellt ist, und ein Speicherelement bzw. einen Mikrochip 10, in welchem Daten zur Identifizierung des RFID-Transponders 5 hinterlegt sind. Die Antenne 9 des RFID-Transponders 5 ist dabei derart im Trägermaterial angeordnet, dass sie über die Sollbruchstelle 6 geführt ist und damit vom ersten Teil 7 des RFID-Transponders bis in den zweiten Teil 8 verläuft. Daher wird die Antenne 9 bei einem Bruch des RFID-Transponders 5 an der Sollbruchstelle 6 zerstört. Der RFID-Transponder 5 verliert damit seine Funktion und kann von der RFID-Ausleseeinheit nicht mehr detektiert werden.

Wird nun beispielsweise durch Belastungen am beispielhaften Fahrwerk, Fahrzeug, etc. die Schraubenmutter 4 gelockert oder gelöst und damit unerwünschte Relativbewegungen zwischen ersten Bauteil 1 und zweitem Bauteil 2 bzw. Lageänderungen des ersten Bauteil 1 oder der Schraube 3 möglich, so bricht der RFID-Transponder 5 aufgrund dieser Relativbewegung bzw. Lageänderung an der Sollbruchstelle 6. Aufgrund des Verlaufs der Antenne 9 wird beim Bruch des RFID-Transponders 5 die Antenne 9 zerstört und der RFID-Transponder 5 kann von der RFID-Ausleseeinheit nicht mehr detektiert bzw. ausgelesen werden.

Aufgrund der fehlenden Daten des RFID-Transponders 5 wird beim Auslesen der Mangel am Fahrzeug bzw. Fahrwerk - z.B. eine gelockerte Schaubverbindung, lockere Schraube 3, etc. - erkannt. Da die am Fahrzeug angebrachten RFID-Transponder 5 eine Kennung aufweisen, aus welcher eindeutig eine Position am Fahrzeug ableitbar ist, kann aufgrund einer fehlenden Rückmeldung eines gebrochenen RFID-Transponders 5 die Position des Mangels auf einfache Weise ermittelt werden.

Es kann dann gezielt, eine Reparatur an dieser Position des Fahrzeugs durchgeführt werden und gegebenenfalls der gebrochene RFID-Transponder 5 durch einen neuen ersetzt werden, so dass ein neuerlicher Mangel an dieser Position auf einfache Weise feststellbar ist.

Die Ausleseeinheit zur Funktionskontrolle der RFID-Transponder 5 kann beispielsweise bei der Wartung bzw. Instandhaltung von Fahrzeugen zum Einsatz kommen. Es ist aber auch möglich, für einen laufende Kontrolle bzw. Überwachung der Fahrzeuge, insbesondere im Bereich der Schienenfahrzeuge und/oder Eisenbahn, RFID-Ausleseeinheiten schienenseitig anzubringen, welche dann die RFID-Transponder 5 auf vorbeifahrenden Fahrzeugen oder z.B. deren Fahrwerken auslesen. Werden einer oder mehrere RFID-Transponder 5 nicht mehr detektiert, so kann z.B. rasch eine Kontrolle, etc. des jeweiligen Fahrzeug veranlasst werden.

### Bezugszeichenliste

- 1: Erstes Bauteil
- 2: Zweites Bauteil
- 3: Drittes Bauteil - Schraube
- 4: Schraubenmutter
- 5: RFID-Transponder mit Stoßschutz/Träger
- 6: Sollbruchstelle
- 7: Erster Teil des RFID-Transponders
- 8: Zweiter Teil des RFID-Transponders
- 9: Antenne
- 10: Speicherelement
- 11: Befestigungsmittel

## Patentansprüche

1. Verfahren zum Erkennen von Relativbewegungen zwischen zumindest zwei Bauteilen eines Fahrzeugs, insbesondere bei Schienenfahrzeugen und/oder Eisenbahnen, **dadurch gekennzeichnet, dass** an einem ersten zu überwachenden Bauteil (1) des Fahrzeugs ein RFID-Transponder (5), welcher einen ersten Teil (7) und einen zweiten Teil (8) sowie eine Sollbruchstelle (6) zwischen dem ersten und dem zweiten Teil (7, 8) aufweist, derart angebracht wird, dass Relativbewegungen und/oder Lageänderungen dieses Bauteils (1) zu einem Bruch des RFID-Transponder (5) an der Sollbruchstelle (6) führen,
und dass der erste Teil (7) des RFID-Transponders (5) zumindest am ersten zu überwachenden Bauteil (1) fest angebracht wird und der zweite Teil des RFID-Transponders zumindest mit einem zweiten zu überwachenden Bauteil (2, 3, 4) in Verbindung gebracht wird.

2. Verfahren nach Anspruch 1, **dadurch gekennzeichnet, dass** für eine Funktionskontrolle der jeweiligen RFID-Transponder (5) zumindest eine RFID-Ausleseeinheit vorgesehen wird.

3. Verfahren nach einem der Ansprüche 1 bis 2, **dadurch gekennzeichnet, dass** der RFID-Transponder (5) eine eindeutige Kennung aufweist, aus welcher eine Position des RFID-Transponders (5) abgeleitet wird.

4. Verfahren nach einem der Ansprüche 1 bis 3, **dadurch gekennzeichnet, dass** eine Anbringung des ersten Teils (7) des RFID-Transponders (5) durch ein Befestigungsmittel (11), insbesondere durch Kleben, Schweißen und/oder Schrauben, erfolgt.

## Claims

1. Method for detecting relative movements between at least two components of a vehicle, in particular in rail vehicles and/or trains, **characterised in that** an RFID transponder (5), which has a first part (7) and a second part (8) as well as a predetermined breaking point (6) between the first part (7) and the second part (8) is attached to a first component (1) to be monitored of the vehicle such that relative movements and/or positional changes of this component (1) lead to a fracture of the RFID transponder (5) at the predetermined breaking point (6),
and that the first part (7) of the RFID transponder (5) is permanently attached at least to the first component (1) to be monitored and the second part of the RFID transponder is connected at least to a second component (2, 3, 4) to be monitored.

2. Method according to claim 1, **characterised in that** at least one RFID reader unit is provided for a function check of the respective RFID transponder (5).

3. Method according to one of claims 1 to 2, **characterised in that** the RFID transponder (5) has a unique code, from which a position of the RFID transponder (5) is able to be derived.

4. Method according to one of claims 1 to 3, **characterised in that** the first part (7) of the RFID transponder (5) is attached by an attachment means (11), especially by gluing, welding and/or screwing.

## Revendications

1. Dispositif permettant l'identification de mouvements relatifs entre au moins deux composants d'un véhicule, en particulier dans des véhicules ferroviaires et/ou des trains, **caractérisé en ce qu'**est monté, sur un premier composant (1) à surveiller du véhicule un transpondeur RFID (5) qui comporte une première partie (7) et une deuxième partie (8) ainsi qu'une zone de rupture imposée (6) entre la première et la deuxième partie (7, 8), de telle sorte que des mouvements relatifs et/ou des modifications de position de ce composant (1) entraînent une rupture du transpondeur RFID (5) au niveau de la zone de rupture imposée (6) et **en ce que**
- la première partie (7) du transpondeur RFID (5) est montée à demeure au moins sur le premier composant (1) à surveiller et
- la deuxième partie du transpondeur RFID est mise en liaison au moins avec un deuxième composant (2, 3, 4) à surveiller.

2. Procédé selon la revendication 1, **caractérisé en ce qu'**au moins une unité de lecture RFID est prévue pour un contrôle fonctionnel des transpondeurs RFID respectifs (5).

3. Procédé selon l'une des revendications 1 à 2, **caractérisé en ce que** le transpondeur RFID (5) présente un identifiant univoque dont est dérivée une position du transpondeur RFID (5).

4. Procédé selon l'une des revendications 1 à 3, **caractérisé en ce qu'**un montage de la première partie (7) du transpondeur RFID (5) est effectué par un moyen de fixation (11), en particulier par collage, soudage et/ou vissage.
